# EUROPÄISCHE PATENTSCHRIFT

(11) **EP 1 123 614 B1**
(45) Veröffentlichungstag und Bekanntmachung des Hinweises auf die Patenterteilung: **09.03.2011**
(21) Anmeldenummer: 99957856.0
(22) Anmeldetag: 05.10.1999
(51) Int. Cl.: H04L 29/06, G06F 9/46

(54) **NETZARCHITEKTUR FÜR KOMMUNIKATIONS- UND/ODER DATENNETZE**
NETWORK ARCHITECTURE FOR COMMUNICATION NETWORKS AND/OR DATA NETWORKS
ARCHITECTURE DE RESEAU POUR RESEAUX DE COMMUNICATION OU DE DONNEES

(30) Priorität: 19.10.1998 DE 19848114
(43) Veröffentlichungstag der Anmeldung: 16.08.2001
(73) Patentinhaber: Nokia Siemens Networks GmbH & Co. KG, 81541 München (DE)
(72) Erfinder: WERNER, Thomas, D-81375 München (DE); HAMANN, Jan, D-81249 München (DE); RIEKEN, Ralf, D-81476 München (DE); BHAVSAR, Umesh, Boca Raton, FL 33433 (US)
(86) Internationale Anmeldenummer: PCT/DE1999/003207
(87) Internationale Veröffentlichungsnummer: WO 2000/024174

(56) Entgegenhaltungen:
- EP-A- 0 412 232
- EP-A- 0 600 235
- WO-A-95/11560
- WO-A-98/21862
- US-A- 5 317 568

## Beschreibung

Die Erfindung betrifft eine Netzarchitektur für verschiedene Kommunikations- und/oder Datennetze zur Bereitstellung von Mehrwertdiensten für Benutzer.

Diese Kommunikations- und Datennetze können unterschiedliche physikalische Eigenschaften haben. Sie können sich in der Art des Zugriffs auf die bereitgestellten Netzfunktionen und in den Prinzipien der Datenübertragung (z. B. die verwendeten übertragungsprotokolle und entsprechenden Normen) unterscheiden. Weiterhin bieten sie unterschiedlichste Dienste für den Benutzer des Netzes an.

Unter einem physikalischen Netz versteht man im Folgenden ein herkömmliches Daten- oder Kommunikationsnetz, wie das schaltungsvermittelte Festnetz (basierend auf SS#7, Zentralkanalsignalisierungssystem Nr. 7), das Mobilfunknetz oder ein Computernetz wie das Internet oder auch ein lokales Netz LAN, basierend auf einem Kommunikationsprotokoll wie etwa TCP/IP oder Token Ring. Die Anbieter der grundlegenden Netzfunktionen werden im Weiteren Netzbetreiber genannt.

Ein Corporate Network (Firmeninternes Netz oder Intranet) bezeichnet im Folgenden ein Daten- oder Kommunikationsnetz oder auch ein Netz aus mehreren solcher Netze, welches einer Organisationseinheit zugeordnet ist. Es ermöglicht die Kommunikation innerhalb dieser Organisation und wird mit technischen Mitteln nach außen abgeschirmt.

Netzbetreiber und Dienstanbieter bieten den Netzbenutzern Grundfunktionen und -diensten der physikalischen Netzen (Grunddienste) zur Verfügung.

Sogenannte Mehrwertdienste können dabei durch Integration von Grunddiensten (in der Regel) eines Netzes erzeugt werden. Diese Mehrwertdienste können dann direkt dem Benutzer vom Dienstanbieter (oder auch speziellen Dienstintegratoren, die ihrerseits wiederum Grunddienste der Dienstanbieter verwenden) verkauft werden.

Im herkömmlichen Festnetz und im Mobilfunknetz etwa werden Mehrwertdienste zusätzlich zu Grunddiensten neben der herkömmlichen Sprach- oder Datenübertragung durch ein sogenanntes Intelligentes Netz realisiert.

Bei diesen Mehrwertdiensten handelt es sich zum Beispiel um eine eindeutige Telefonnummer für einen Benutzer im gesamten Netz (Universal Personal Number), gebührenfreie Telefonnummern (Freephone) oder die Stimmabgabe über Telefon (Televoting).

Diese Mehrwertdienste werden durch zentral im Netz bereitgestellte Netzelemente (SSP, Service Switching Point, SCP, Service Control Point etc.) realisiert.

Die Beschreibung der Prinzipien eines Intelligenten Netzes findet sich in der ITU Protokollsuite Q.12xx wieder.

Durch diese zentralisierte Realisierung von Mehrwertdiensten in einem Netz ergeben sich mehrere Nachteile.

Die für die Dienste zuständigen Netzelemente erweisen sich bei hoher Netzauslastung als Engpaß, da alle Diensteabfragen über diese Netzelemente laufen und dort verarbeitet werden müssen. Dieses erfordert bei größeren, gut ausgelasteten Netzen eine entsprechend hohe Investition in hochperformante Hardware insbesondere für die zentral steuernden Netzelemente ("Flaschenhals"), da nur diese das Verkehrsaufkommen bei noch akzeptablen Verzögerungszeiten bewältigen kann.

Zudem muß eine hohe Verfügbarkeit der zentralen Netzknoten wie dem SCP, der für die Bearbeitung der Dienstanforderungen zuständig ist, gewährleistet sein. Ein Ausfall eines einzigen solchen Netzknotens bedeutet hier die Nichtverfügbarkeit aller Mehrwertdienste des gesamten Netzes.

Aus diesen Gründen kann die notwendige Technik zur Bereitstellung der Mehrwertdienste momentan nur von großen Netzbetreibern zur Verfügung gestellt werden. Kleinere Betreiber (z. B. City Carrier) können die Investition in die notwendige kostspielige Netzelemente allein nicht erbringen. Eine Nutzung der Netzelemente durch mehrere Dienstanbieter oder Dienstintegratoren ist momentan nicht möglich, da eine Trennung der unterschiedlichen Funktionalitäten, die in den zentralen Netzknoten realisiert ist, nicht vorgesehen ist.

Zudem sind die unterschiedlichen Netze physikalisch voneinander getrennt. Um die Dienste der Netze nutzen zu können, muß ein Kunde zwischen verschiedenen Dienstanbietern wechseln, was im Einzelfall auch den Wechsel des Endgerätes zur Folge haben kann.

Die Bereitstellung netzübergreifender Kommunikation ist nur durch Übergänge zwischen den einzelnen Netzen möglich, es muß für jeden Netzübergang (z. B. Festnetz zu Mobilfunknetz, ISDN zu Internet) eine Anbindung, entsprechend der auf beiden Seiten verwendeten Protokolle, geschaffen werden. Aus den Druckschriften EP 0600 235 A1 und US5317 568 sind Netzarchitektur bekannt in denen mahrere Computernetzwerke integriert sind.

Aufhabe der Erfindung ist es, eine Möglichkeit anzugeben, wie die vorhandenen physikalischen Netze inklusive ihrer Basisdienste einheitlich zur Verfügung gestellt werden können, unter Vermeidung der oben genannten Nachteile. Dabei sollen auch Mehrwertdienste, als Kombination von in verschiedenen physikalischen Netzen angebotenen Basisdiensten, integriert werden können.

Diese Aufgabe wird gelöst durch ein Verfahren gemäβ Patentanspruch 1, sowie durch eine Netzarchitektur gemäß Patentanspruch 4.

Es wird eine neue, verteilte Netzarchitektur eingeführt, in Form einer Schicht aus Netzelementen zwischen den bereits existierenden physikalischen Netzen und den Dienstanbietern bzw. Benutzern. Diese Netzelemente kommunizieren dabei über Schnittstellen sowohl miteinander, als auch mit den mit ihnen verbundenen physikalischen Netzen. Diese Schicht, die durch im Netz verteilte Netzelementen realisiert wird, ermöglicht dem Benutzer des Netzes (auch dem Dienstanbieter) den Zugriff zu den in den physikalischen, darunterliegenden Netzen vorhandenen Netzressourcen. Dabei können alle vorhandenen Grund-und Mehrwertdienste genutzt werden (Transparenz). Die benötigten und erzeugten Daten (Zugriff, Vergebührung, Verkehrsmessungen...) werden getrennt nach den Benutzern oder Dienstanbietern in den jeweiligen physikalischen Netzen gesammelt, verwaltet und für die Weiterverarbeitung zur Verfügung gestellt.

Es wird also die Integration von Grunddiensten verschiedener physikalischer Netze ermöglicht, als auch die einheitliche Bereitstellung von Grund- und Mehrwertdiensten der verschiedenen physikalischen Netze.

Weiterhin können Netzelemente der erweiterten Architektur spezielle Dienste zur Steuerung der Netze bereit stellen, insbesondere zentrale Dienste wie Naming, Trading oder Sicherheitsfunktionen. Diese Bereitstellung kann entweder getrennt, in separaten Netzelementen, oder in den Netzelementen, welche auch die allgemeinen Dienste bereitstellen, geschehen.

Die bisherige Funktionalität eines zentralen Netzelementes kann so auf mehrere gleichartige Netzelemente verteilt werden. Damit erhält man eine Netzarchitektur, die flexibel auf Änderungen der Bedürfnisse von Betreibern und Benutzern eingehen kann.

Weiterhin zeichnet sich diese Architektur durch eine wesentlich höhere Zuverlässigkeit, Verfügbarkeit und Fehlertoleranz aus.

Vorteilhafte Ausgestaltungen und Weiterbildungen sind in den Unteransprüchen angegeben.

Die Netzelemente sind durch zur Verfügung stehende Datennetze wie das Internet miteinander verbunden. Erforderliche Informationen werden über dieses Netz ausgetauscht. Die Zusammenarbeit und der Austausch der Informationen wird durch ein verteiltes Netz-Betriebssystem gesteuert, welches in den einzelnen Netzelementen residiert. Dabei wird durch das zweiseitige Transaktionsprinzip sichergestellt, daß Änderungen sicher durchgeführt werden.

Das Prinzip der verteilten Betriebssysteme ist dem Fachmann bereits bekannt.

Durch diese Struktur wird eine flexible Integration von Diensten verschiedener Netze möglich, den Benutzern können so neue Dienste und Mehrwertdienste geboten werden. Ein Netzelement (Client) gibt hierzu Aufrufe von Netzfunktionen an ausführende Netzelemente (Server) weiter.

In einer vorteilhaften Ausgestaltungsform der Erfindung werden die Schnittstellen zu unterliegenden physikalischen Netzen standardisiert. Dadurch wird das Zusammenwirken der einzelnen Netzelemente wesentlich vereinfacht, eine technische Abstimmung von Dienstanbietern, Netzbetreibern und den zusätzlichen Dienstintegratoren kann entfallen. Auch die Eingliederung neuer physikalischer Netze, Netzelemente oder Grund- und Mehrwertdiensten ist so problemlos möglich.

In einer weiteren Ausgestaltungsform der Erfindung werden an der Oberfläche zu den physikalischen Netzen standardisierte Funktionsaufrufe zur Verfügung gestellt. Dies verringert den Aufwand bei der Implementierung von Diensten.

Unter einer Funktionsklasse ist dabei eine logische Zusammenfassung von mehreren Funktionsaufrufen zu verstehen, die einem bestimmten Zweck dienen. Beispiele hierfür sind etwa das 'Connection Management', 'Port Management', 'Quality of Service Management' oder das 'Event Monitoring'.

Diese Funktionsaufrufe werden dann wiederum in systemspezifische Meldungen und Kommandos umgesetzt und in den entsprechenden Netzelementen ausgeführt.

'Plug & Play' ist inzwischen ein bekanntes Prinzip. In der beschriebenen Architektur bedeutet dies, ohne daß weitere größere Anpassungen kann ein neues Netzelement in die bestehende Netzstruktur eingehängt werden. Die dynamische Integration geschieht automatisch, durch Registrierung von Funktionen, Funktionsklassen und Netzelementen an benachbarten Netzelementen. Zum Beispiel durch ein 'Broadcast' Verfahren kann diese Information dann in kurzer Zeit im gesamten Netz verteilt werden. Die Registrierung kann auch an einem speziellen, für diesen Zweck ausgezeichneten Netzelement geschehen, der dann für die netzweite Verteilung und/oder Verwaltung der Informationen zuständig ist.

Dieses Prinzip kann nicht nur auf einzelne physikalische Netze oder Netzelemente angewendet werden, sondern ebenfalls auf die in diesen Netzelementen realisierten Funktionen und Diensten.

Eine wesentliche Ausgestaltung der Erfindung beinhaltet die Verteilung der Netzfunktionen in den Netzelementen. Durch eine hohe Redundanz der Funktionen wird zum einen eine hohe Ausfallsicherheit erlangt. Dies wird auch durch die Auswahl des den Aufruf bearbeitenden Netzknoten erzielt. Eine Last-teilung im Netz kann dadurch realisiert werden.

Es ist auch möglich, bei Bedarf gleiche Funktionen in verschiedenen Netzelementen gleichzeitig anzusprechen und auszuführen.

Insbesondere bei häufig benutzten Grundfunktionen der Netzarchitektur (wie Adresskonvertierung, Datenverwaltungen, Leistungsüberwachungen) bringt es enorme Effizienzsteigerungen, wenn die entsprechend notwendigen Funktionen standardmäßig in mehreren bzw. allen Netzelementen implementiert sind. So müssen die entsprechenden Funktionsaufrufe nicht mehr aufwendig durch das gesamte Netz geroutet werden, die ausführenden Netzelemente werden entlastet.

Die dadurch definierte Menge an 'Grundfunktionen' ist dabei nicht statisch, sondern jederzeit ändert- und erweiterbar sein.

Die gegenwärtige Verteilung der Aufgaben in den bestehenden Telekommunikationsnetzen entspricht vielfach nicht mehr den aktuellen Anforderungen. Kleinere Dienstanbieter und Betreiber drängen auf den Markt. Neben den Netzbetreibern sind die Dienstbetreiber und nicht zuletzt die Dienstanbieter, welche den direkten Kontakt zu Kunden pflegen, an einer neuen Aufteilungsmöglichkeit der benötigten Hardware interessiert.

Durch den der Erfindung zugrunde liegenden Ansatz der Einführung einer verteilten Architektur sowie von offengelegten Schnittstellen werden zwischen den einzelnen Betreibern und Betreibertypen flexible und transparente Geschäftsbeziehungen möglich. Dritthersteller können ihre Dienste und Anwendungen integrieren und so zusätzliche Mehrwertdienste realisieren. Eine Kostenreduktion wird ebenfalls erreicht.

Weiterhin können Kunden Mehrwertdienste, integriert aus unterschiedlichen Netzen, benutzen, wobei immer eine korrekte Abrechnung gegenüber den unterschiedlichen Netzbetreibern und Dienstanbietern sichergestellt wird.

Im folgenden wird die Erfindung anhand von Ausführungsbeispielen erläutert. Dabei zeigen
- Figur 1: eine beispielhafte verteilte Netzarchitektur mit un- terschiedlichen unterliegenden physikalischen Kommu- nikations- und Datennetzen,
- Figur 2: eine beispielhafte verteilte Netzarchitektur mit 2 unterliegenden physikalischen Netzen sowie einem Dienstintegrator und einem Diensteanbieter,
- Figur 3: einen von einem API-Manager (Client) kommenden Auf- ruf, der an die ausführenden Netzknoten (Server) wei- tergeleitet wird,
- Figur 4: eine Schnittstelle zwischen dem zugrunde liegenden physikalischen Netz und
- Figur 5: eine mögliche Realisierungslösung mit Schnittstellen zu verschiedenen physikalischen Netzen, und
- Figur 6: eine beispielhafte Verteilung der Zugriffe auf die physikalischen Netz-Ressourcen durch Dienstanbieter, -integrator und Netzbetreiber.

Einschränkungen in den Figuren/Ausführungsbeispielen sind für die Erfindung nicht zwingend.

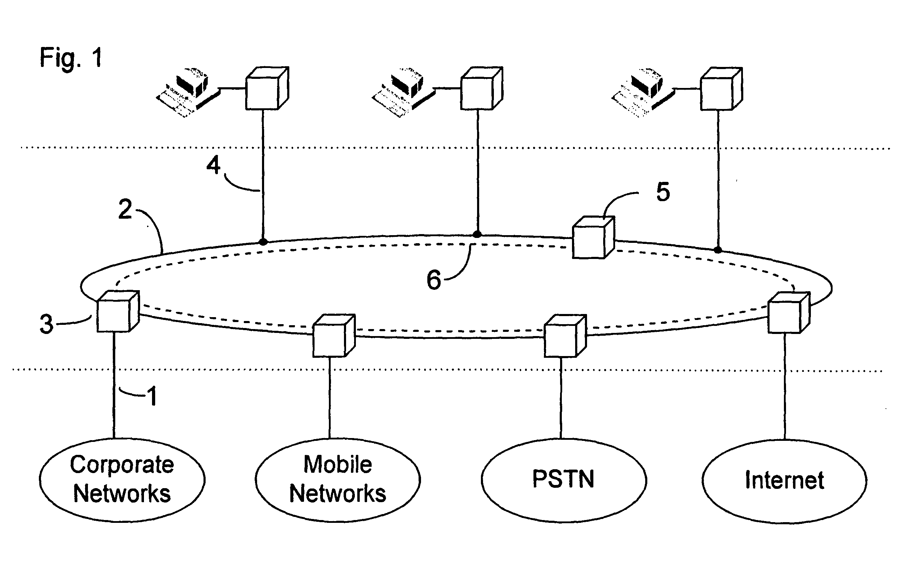

Die Figur 1 zeigt schematisch eine verteilte Netzarchitektur, welche sich in 3 Schichten manifestiert. In der 'untersten Schicht' auf diesem Bild sieht man die unterschiedlichsten physikalischen Netze, wie sie derzeit existieren. Es handelt sich um Datennetze (Corporate Networks, Internet) und Kommunikationsnetze (Mobile Networks, PSTN), viele andere sind denkbar. Insbesondere existieren zwischen den einzelnen Netzen bislang keine oder nur sehr unzureichende Verbindungen. Die mittlere Schicht zeigt nun die verteilte Netzarchitektur, die 'über' den physikalischen Netzen etabliert wird. Die einzelnen physikalischen Netze sind dabei jeweils über mindestens eine Verbindung (1) und eine geeignete Schnittstelle in einem Netzelement (3) mit einem Datennetz (2) verbunden. Hier geschieht die Dienstintegration. Die Darstellung des Datennetzes als Ring ist hierbei nur eine Möglichkeit, der Aufbau des Datennetzes ist für die Erfindung nicht von Bedeutung.

In diesem Datennetz befinden sich die im wesentlichen gleichartigen, verteilten Netzelemente (3, 5), welche bezüglich der Anforderungen an ihre Leistungsfähigkeit anpassbar sind. Einzelne Netzelemente (5) können auch nur zur Steuerung des Netzes eingesetzt werden, indem sie hierfür benötigte Dienste bereitstellen. Andere Netzelemente (3) nehmen die Kommunikation und Zusammenarbeit mit den unterliegenden physikalischen Netzen wahr und stellen die hierfür benötigten Schnittstellen bereit.

Die Zusammenarbeit und der Austausch von Informationen (etwa zur Registrierung von Netzelementen und Funktionen) wird durch ein verteiltes Netz-Betriebssystem (6) gesteuert. Dieses residiert in den einzelnen Netzelementen (3, 5).

In der obersten 'Schicht' befinden sich die Netzelemente der Dienstanbieter. Diese sind ebenfalls über geeignete Schnittstellen (4) an das Datennetz angeschlossen. Hierüber werden die dieserseits erforderlichen Informationen (für Authentisierung der Benutzer, Vergebührung, Administration der Dienste etc.) ausgetauscht. Dies kann ebenfalls in standardisierter Form erfolgen, was eine deutliche Vereinfachung der Kommunikation auch verschiedener Dienstanbieter und Dienstintegratoren gewährleistet.

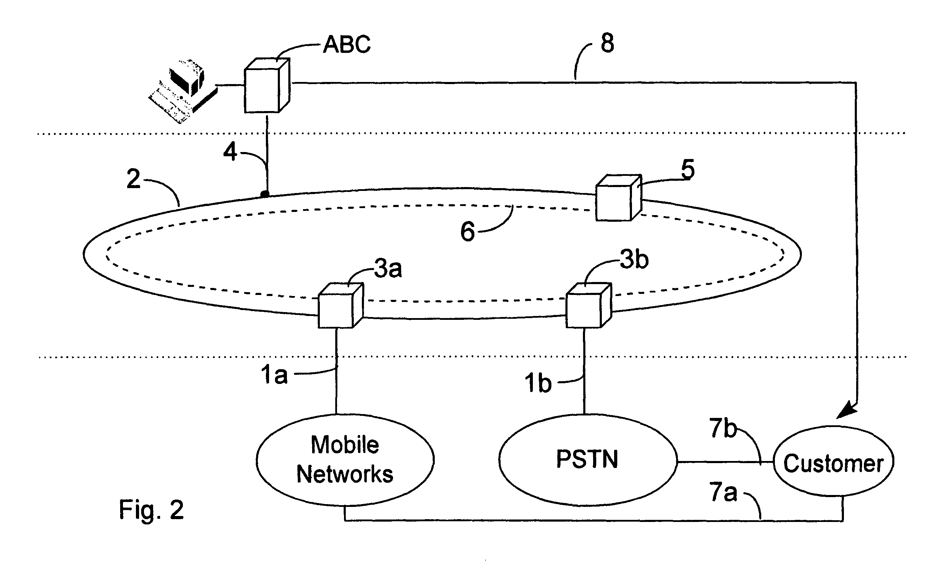

Um das oben erläuterte Beispiel noch zu spezifizieren, wird in Figur 2 eine genauer definierte Konfiguration zugrunde gelegt.

Ein Benutzer (Customer) bezieht einen Mehrwertdienst von einem Dienstanbieter, welcher aus einem Festnetz- (PSTN, 7b) und einem Mobilfunkdienst (Mobile Networks, 7a) besteht. Die Grunddienste werden von zwei unterschiedlichen Netzbetreibern zur Verfügung gestellt(7a, 7b). Diese Dienste werden ihm von einem Dienstanbieter gemeinsam angeboten (8), der in seinem Kundenbetreuungszentrum (ABC, Administration, Billing, Customer-Care Center) das Kundenprofil speichert und verwaltet und rechnet die verkauften Dienste mit dem Kunden ab.

Von dem Dienstanbieter werden über eine Schnittstelle (4) (zum Beispiel durch ein API, Application Programming Interface, realisiert) die relevanten Informationen des Kundenprofils, wie Kunden-ID, Diensteprofil, für den Bezug des jeweiligen Dienstes von dem Dienstanbieter an den Dienstintegrator weitergeleitet, der seinerseits das jeweilige Teilprofil für den Festnetz- und Mobilfunkdienst über Schnittstellen (1a, 1b an den Netzbetreiber weiterleitet und von diesem über dieselbe Schnittstelle benötigte Informationen, wie die eingerichtete Festnetznummer und Mobilfunkrufnummer zurückgemeldet bekommt.

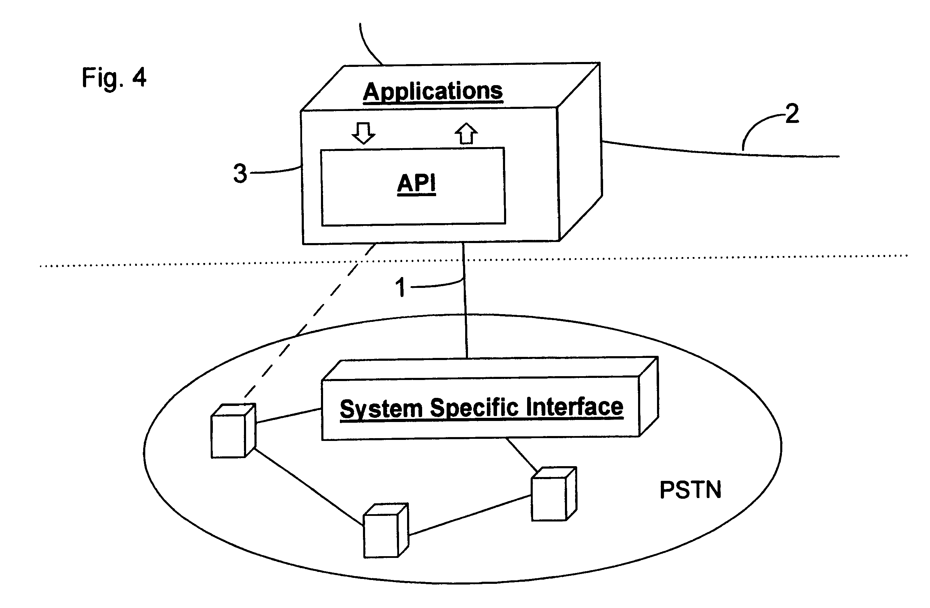

Anhand der vom Dienstanbieter angeforderten Diensteparameter werden vom Dienstintegrator über ein Netzelement (5) die entsprechenden, mit den physikalischen Netzen der Netzbetreiber verbundenen Netzelemente (3a, 3b) angesteuert, die die geeigneten Schnittstellen (1a, 1b bedienen. Diese Schnittstellen sind auf die spezifischen Anforderungen des jeweiligen physikalischen Netzes ausgerichtet (siehe auch Figur 4).

Falls der Benutzer bei den Netzbetreibern noch nicht freigeschaltet war, so geschieht dieses jetzt, durch die Ausführung der Anforderung des Dienstintegrators durch die Netzbetreiber, und die erforderlichen Grunddienste und Leistungsmerkmale werden eingestellt. Die erfolgreiche Einrichtung des Teilnehmers wird vom Netzbetreiber dann an den Dienstintegrator zurückgemeldet (Transaktionsprinzip). Ein geeignetes Netzelement (3 oder 5) des Dienstintegrators empfängt diese Rückmeldung, wertet sie aus und ermittelt anhand des vom Dienstanbieter angeforderten Mehrwertdienstes weitere benötigte Netzelemente (3a oder 3b) und leitet die erforderlichen Informationen über das verbindende Netz (2) an die beteiligten Netzelemente (3a, 3b) weiter.

Diese wiederum leiten nach Bearbeitung der eingegangenen Information die noch bestehenden Anforderungen an die entsprechenden Netzelemente der Netzbetreiber weiter, die sich in den Basisnetzen (Mobile Networks, PSTN) befinden.

Sind alle für einen Mehrwertdienst des Dienstanbieters erforderlichen Leistungen der Netzbetreiber freigeschaltet und über die Schnittstellen (1a, 1b) bestätigt, bestätigt der Dienstintegrator die komplette Freigabe des Dienstes für eine Kunden-ID über die Schnittstelle (4) an den Dienstanbieter, der den Kunden von dieser Freigabe über die Schnittstelle (8) benachrichtigt. Damit kann der Mehrwertdienst vom Kunden genutzt werden.

Nutzungsabhängige Informationen, die aufgrund der Benutzung der Grunddienste in den Netzelementen der Netzbetreiber ermittelt werden, werden zunächst über die Schnittstelle (1a, 1b) an die Dienstintegrator weitergeleitet. In den Netzelementen (3a, 3b, 5) werden diese Informationen entsprechend der, dem Dienstanbieter zur Verfügung gestellten integrierten Mehrwertdienste gesammelt, mit einem Kennzeichen (User-ID, Service-ID) versehen und an das Kundenbetreuungszentrum (ABC) über (4) weitergeleitet.

Damit ist nun der Dienstanbieter in der Lage, die empfangenen Informationen dem jeweiligen Kundenprofil zuzuordnen, auszuwerten und abzurechnen (8).

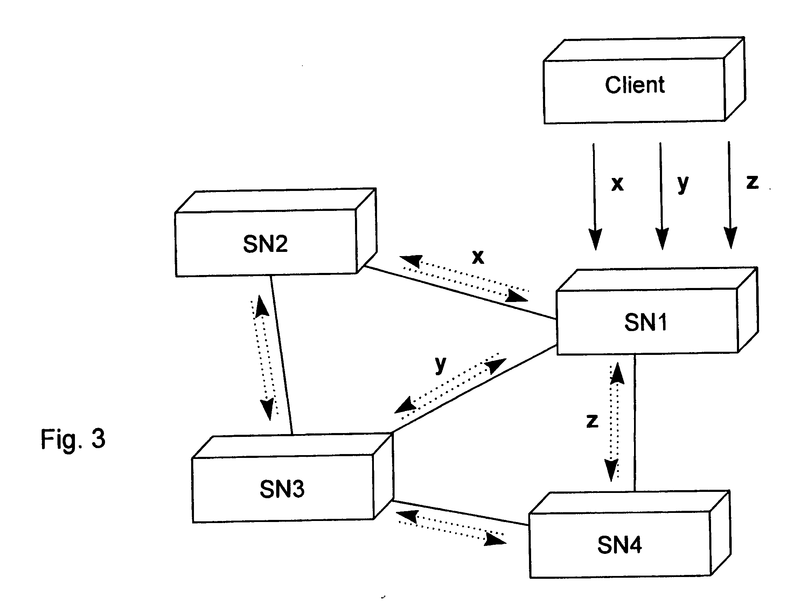

Figur 3 zeigt einen Ausschnitt der neuen Architektur, welche den physikalischen Netzen übergeordnet ist.

Dargestellt sind 4 Netzelemente (SN1 - SN4, Server Nodes), die über ein Datennetz verbunden sind und Funktionsaufrufe und Informationen austauschen, gesteuert durch ein verteiltes Netz-Betriebssystem.

Ein in einem der Netzelemente (Client) residierender API-Manager routet zu Applikationen zugehörende Aufrufe von Netzfunktionen zu den ausführenden Netzelementen (Server Nodes). Dazu stellt der API-Manager die erforderlichen Routing-Informationen netzweit zur Verfügung. Diese Informationen werden zwischen den Netzelementen ausgetauscht und konsistent gehalten.

Netzweit verteilte Ressourcen können so genutzt werden. Damit ist zum Beispiel eine Last-Teilung möglich, indem gleiche Funktionen in mehreren Netzelementen angesprochen werden können.

Das in der Figur dargestellte Beispiel enthält einen Applikationsaufruf eines Mehrwertdienstes, der Funktionsaufrufe für mehrere Teilfunktionen (x, y, z) enthält. Das erste angesprochene Netzelement kann jedoch den Funktionsaufruf nicht bearbeiten, da es die erforderlichen Funktionen nicht enthält oder seine Kapazität bereits vollständig ausgelastet ist.

Es leitet die Funktionsaufrufe an einen Nachbarknoten weiter, und so kann eine Anwendung (xyz) auf in diesem Beispiel drei verschiedenen Netzelementen parallel weiterbearbeitet werden. Netzelement (SN2) übernimmt die Bearbeitung von Funktionsteil (x), Netzelement (SN3) die Bearbeitung von (y) und Netzelement (SN4) die Bearbeitung von (z).

Das Routing der einzelnen Teilfunktionsaufrufe zu den bearbeitenden Netzelementen kann durch verschiedene Kriterien gesteuert sein. Beispielhaft wurden hier das Vorhandensein der benötigten Funktion und die Auslastung der einzelnen Netzelemente angegeben. Ein weiteres Kriterium in dem verteilten Netz kann die Länge des Weges zu dem bearbeitenden Knoten darstellen, andere Kriterien sind vorstellbar.

Figur 4 beschreibt im Detail die Schnittstelle zwischen einem physikalischen Netz (PSTN) und einem Netzelement in der neuen verteilten Netzarchitektur.

Die Schnittstellenkomponente (API) ist dabei auf die spezifischen Anforderungen des jeweiligen darunterliegenden Basisnetzes ausgerichtet. Sie ist so aufgebaut, daß sie die Funktionsaufrufe für eine Gruppe systemunabhängiger Funktionsklassen über die Schnittstelle (2) entgegennimmt und in systemspezifische Kommandos und Prozeduren der Netzelemente im physikalischen Netz umsetzt. Die Schnittstelle des (API) nach 'unten' ist demgemäß abhängig von dem unterliegenden physikalischen Netz. Beispiele für verwendbaren Protokolle zur Kommunikation sind MML (Man Machine Language), CCS#7 (Signalling System Nr. 7), INAP (Intelligent Network Application Part) oder DSS1 (Digital Subscriber Signalling System Nr. 1; EURO ISDN Signalisierung), abhängig von dem physikalischen Netz.

Die Schnittstelle des (API) nach 'oben' jedoch ist einheitlich definiert. Die definierten Funktionsklassen können zum Beispiel Verbindungs- (Connection) Management, Port Management, Ereigniskontrolle (Event Monitoring) und Qualitäts-(Quality-of-Service) Management beinhalten.

Dieses Prinzip der offengelegten, standardisierten Schnittstellen vereinfacht die Zusammenarbeit der Netzbetreiber mit den Dienstanbietern und -integratoren, insbesondere bei der Einführung neuer physikalischer Netze und das Zusammenspiel der unterschiedlichen physikalischen Netze.

Die Schnittstelle zum physikalischen Netz muß dabei nicht nur mit einem Netzknoten bestehen (gestrichelte Linie).

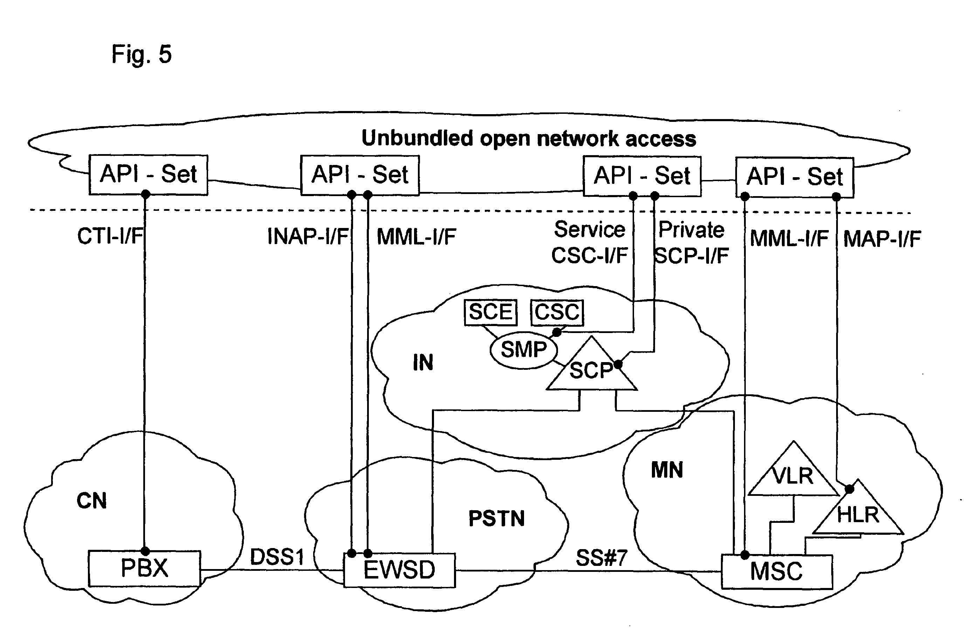

Figur 5 zeigt einen möglichen Aufbau aus der Sicht der physikalischen Netze.

Hier sind deutlich verschiedene physikalische Netze zu erkennen, die teilweise bereits Protokoll-Schnittstellen miteinander besitzen. Diese Schnittstellen sind jedoch immer auf 2 konkrete physikalische Netze beschränkt, etwa von der digitalen Fernsprechvermittlungsstelle (EWSD) in einem Festnetz (PSTN) zu dem Mobile Services Switching Center (MSC) auf der Mobilfunkseite über das Zentralkanalsignalisierungssystem Nr.
7 (SS#7) auf der einen Seite und zu einem Firmennetz (Corporate Network CN) und dessen Privater Vermittlungsstelle (PBX) mittels EURO ISDN Signalisierung (DSS1, Digital Subscriber Signalling System Nr. 1) andererseits.

Durch dieses Beispiel wird klar, daß jede Schnittstelle zwischen den Netzen durch die Anforderungen, die jedes physikalische Netz hat, eine eigene Definition benötigt. Bei der steigenden Anzahl von verschiedenartigen Netzen ist dies nicht für alle Netze möglich. Für jedes neu eingefügte Netz muß zu allen bestehenden Netzen eine Schnittstelle geschaffen werden. In unserem Beispiel hat etwa das Firmennetz (CN) eine Verbindung zu dem Mobilfunknetz (MN) nur via dem herkömmliche Festnetz (PSTN). Ein integrierter Dienst aus einem CN-Grunddienst und einem Mobilfunkdienst wäre somit nicht ohne Berücksichtigung von PSTN-Funktion möglich.

Durch eine überlagernde Netz-Architektur kann die Anzahl der benötigten Schnittstellen nun auf die Anzahl der vorhandenen physikalischen Netze reduziert werden. Diese Schnittstellen (API-Sets) bieten für den Benutzer eine einheitliche Oberfläche für den Zugriff auf Dienste der physikalischen Netze. Die zentrale Vermittlungsstelle (PBX) eines internen Firmennetzes (CN) etwa erhält ein sogenanntes CTI-Interface (CTI-I/F, Computer Telephony Integration). Damit ist eine Verknüpfung von Telefonie und Datenverwaltung im Computer möglich, also etwa das Suchen und Anwählen einer Telefonnummer in einem Telefonbuch, welches in einem PC oder einem Organizer gehalten und gepflegt wird, wobei das Aufbauen der Verbindung zu einem zweiten Endgerät (in der Regel ein Telefon) geschieht.

Ein Festnetz ist im Wesentlichen durch Fernsprechvermittlungsstellen aufgebaut. Die Schnittstelle kann hier verschiedenartig realisiert sein, etwa durch eine Schnittstelle nach INAP Protokoll (INAP-I/F, Intelligent Network Application Part) oder ein Man Machine Language Interface (MML I/F).

Es wird weiterhin deutlich, daß ein Kommunikationsprotokoll bei verschiedenartigen physikalischen Netzen Einsatz finden kann, da ebenfalls bei der Schnittstelle zu den Vermittlungsstellen (MSC) im Mobilfunknetz (MN) das Man Machine Language (MML) Protokoll zum Einsatz kommen kann.

In dem Intelligenten Netz (IN), welches bereits eine Netzarchitektur für ein Festnetz oder Mobilfunknetz mit zusätzlichen Netzknoten zur Verarbeitung von Funktionsaufrufen für Mehrwertdienste darstellt, sind die für die Bearbeitung von Dienstanforderungen wesentlichen Netzelemente dargestellt. Der Service Control Point (SCP) stellt dabei den zentralen Knotenrechner dar, welcher die Dienst- und Funktionsaufrufe auswertet und verarbeitet. Dieser Knotenrechner ist bislang auch die zentrale Schnittstelle zu anderen physikalischen Netzen wie dem Festnetz (PSTN) oder Mobilfunknetz (MN). Eine mögliche Schnittstelle zu diesem zentralen Netzknoten ist eine Private SCP Schnittstelle (Private SCP-I/F) möglich.

Die IN-Netzarchitektur wird ebenfalls als Basisnetz betrachtet.

Der Service Management Point (SMP) ist für die Einführung, die Bereitstellung und die Pflege von Mehrwertdiensten verantwortlich. Die Entwicklung von neuen Diensten inklusive Test wird dabei im Service Creation Environment (SCE) durchgeführt. Das Customer Service Center (CSC) pflegt und aktualisiert die Kundendaten. Eine Schnittstelle zum CSC ist das (Service CSC-I/F).

Das Mobilfunknetz verwaltet seine Kundendaten in einem Home Location Register (HLR) und einem Visitor Location Register (VLR). Ebenso wie bei Festnetz (EWSD) und Intelligentem Netz (IN) gibt es eine erste Schnittstelle zum Vermittlungsrechner (MSC). Eine weitere Schnittstelle bietet sich an mittels einem dem INAP ähnlichen Protokoll Mobile Application Part (MAP).

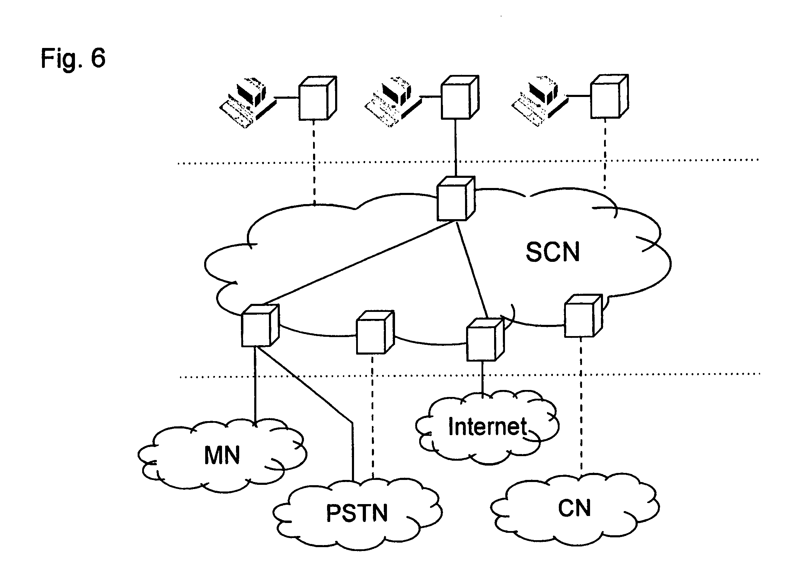

Figur 6 zeigt nochmals ein beispielhaftes Netz, welches eine Aufteilung von Diensten und Ressourcen in 3 Schichten darstellt.

In der untersten Schicht befinden sich die Netzbetreiber, welche die physikalischen Netze (MN, PSTN, Internet, CN) mit den Grunddiensten zur Verfügung stellen.

Davon entkoppelt, in der 'mittleren' Schicht befindet sich das erfindungsgemäße Datennetz (SCN) mit einzelnen Netzelementen. Hier werden Mehrwertdienste erzeugt, die Ressourcen und Dienste verschiedener physikalischer Netze nutzen können, und die durch Dienstintegratoren den Dienstanbietern bereitgestellt und von diesen angeboten werden.

In der 'obersten' Schicht dann arbeiten die Dienstanbieter, welche die Mehrwertdiente unabhängig von den verwendeten physikalischen Netzen und Grundfunktionen dem Benutzer dieser Dienste zur Verfügung stellen können.

### Abkürzungsverzeichnis

- ABC: Administration, Billing, Customer Care
- API: Application Programming Interface
- CCS7: Common Channel Signaling System No. 7 (= SS#7)
- CN: Corporate Network
- CSC: Customer Service Center
- CTI: Computer Telephony Integration
- DSS1: Digital Subscriber Signalling System No. 1; EURO ISDN Signalisierung
- EWSD: Elektronisches Wählsystem Digital
- HLR: Home Location Register
- I/F: Interface
- IN: Intelligent Network
- INAP: Intelligent Network Application Part
- ITU: International Telecommunication Union
- MAP: Mobile Application Part
- MML: Man Machine Language
- MN: Mobile Network
- MSC: Mobile Services Switching Center
- PBX: Private Branch Exchange
- PSTN: Public Switched Telephone Network
- SCE: Service Creation Environment
- SCP: Service Control Point
- SMP: Service Management Point
- SN: Server Node
- SS#7: Zentralkanalsignalisierungssystem Nr. 7
- VLR: Visitor Location Register

### Literaturangaben:

Q.1200
   ITU-T General Recommendations On Telephone Switching And Signalling - Intelligent Network (3/93)

## Patentansprüche

1. Verfahren zur Bereitstellung eines Telekommunikations-Mehrwertdienstes für Nutzer des Dienstes, durch einen Diensteintegrator (3, 5), der besteht aus
- Grund-Diensten von mindestens einem ersten Diensteanbieter (7a) eines ersten physikalischen Telekommunikationsnetzes und
- Grund-Diensten von einem zweiten Diensteanbieter (7b) eines zweiten Telekommunikationsnetzes, wobei
- der Diensteintegrator (3, 5) ein Diensteprofil für einen Teilnehmer verwaltet und
- dieses Diensteprofil ein erstes Teilprofil für das erste physikalische Telekommunikationsnetz und ein zweites Teilprofil für ein zweites physikalisches Telekommunikationsnetz enthält, wobei
- der Diensteintegrator (3, 5) die beiden Teilprofile an die jeweiligen Netzbetreiber des ersten bzw. des zweiten physikalischen Telekommunikationsnetzes weiterleitet und wobei
- der Diensteintegrator (3, 5) einen angeforderten Mehrwert-Dienst ausführt, sobald die zur Durchführung des Mehrwert-Dienstes benötigten Grund-Dienste an den Diensteintegrator (3, 5) durch die zugehörigen physikalischen Telekommunikationsnetze freigegeben sind.

2. Verfahren nach Patentanspruch 1, **dadurch gekennzeichnet, dass** die Kommunikation zwischen dem Diensteintegrator (3, 5) und dem Diensteanbieter nach dem Transaktionsprinzip geschieht.

3. Verfahren nach einem der Patentansprüche 1 oder 2, **dadurch gekennzeichnet, dass** die Abrechnung der verwendeten Dienste mit dem Teilnehmer durch ein Kundenbetreuungszentrum (ABC) des Diensteintegrators (3, 5) durchgeführt wird.

4. Netzarchitektur für Kommunikations- und/oder Datennetze zur Durchführung des Verfahrens nach Patentanspruch 1, die Netzarchitektur aufweisend
- zwei physikalische Telekommunikationsnetze,
- eine verteilte Netzarchitektur mit mehreren Netzelementen (3, 5), wobei zumindest einige der Netzelemente (3, 5) zur Kommunikation und Zusammenarbeit mit jeweils einem physikalischen Netz vorgesehen sind, und
- zumindest einen Dienstanbieter (8), welcher über eine systemunabhängige Schnittstelle (4) über eine einheitliche logische Oberfläche mit der verteilten Netzarchitektur gekoppelt ist.

5. Netzarchitektur nach Anspruch 4,
**dadurch gekennzeichnet, dass**
die Steuerung von Netzfunktionen der verschiedenen physikalischen Netze von einem verteilten Betriebssystem (6) übernommen wird.

6. Netzarchitektur nach einem der vorigen Ansprüche 4 bis 5, **dadurch gekennzeichnet, dass**
die dynamische Integration neuer Netzelemente (3, 5) ermöglicht wird, indem das neue Netzelement (3, 5) eine Registrierung vornimmt bei einem geeigneten anderen Netzelement (3, 5), welches diese Informationen speichert und an andere Netzelemente (3, 5) weiterverteilt.

7. Netzarchitektur nach einem der vorigen Ansprüche 4 bis 6, **dadurch gekennzeichnet, dass**
die dynamische Integration neuer Schnittstellen (1a, 1b, 4) von bereits vorhandenen Netzelementen (3a, 3b, 4) ermöglicht wird, indem ein Netzelement (3a, 3b, 4) eine Registrierung der neuen Funktionen vornimmt bei einem geeigneten anderen Netzelement, welches diese Informationen speichert und an weitere andere Netzelemente weiterverteilt.

## Claims

1. Method for the provision of a value-added telecommunication service for users of the service by a service integrator (3, 5) which comprises
- basic services from at least one first service provider (7a) in a first physical telecommunication network and
- basic services from a second service provider (76) in a second telecommunication network, wherein
- the service integrator (3, 5) manages a service profile for a subscriber, and
- said service profile contains a first profile element for the first physical telecommunication network and a second profile element for a second physical telecommunication network, wherein
- the service integrator (3, 5) forwards the two profile elements to the respective network operators of the first and second physical telecommunication networks and wherein
- the service integrator (3, 5) performs a requested value-added service as soon as the basic services required for performing the value-added service have been released to the service integrator (3, 5) by the associated physical telecommunication networks.

2. Method according to Patent Claim 1, **characterized in that** the communication between the service integrator (3, 5) and the service provider takes place on the basis of the transaction principle.

3. Method according to one of Patent Claims 1 and 2, **characterized in that** the billing for the services used with the subscriber is performed by a customer care centre (ABC) of the service integrator (3, 5).

4. Network architecture for communication and/or data networks for carrying out the method according to Patent Claim 1, said network architecture having
- two physical telecommunication networks,
- a distributed network architecture having a plurality of network elements (3, 5), wherein at least some of the network elements (3, 5) are provided for the purpose of communication and cooperation with a respective physical network, and
- at least one service provider (8) which is coupled to the distributed network architecture via a system-independent interface (4) by means of a uniform logical interface.

5. Network architecture according to Claim 4,
**characterized in that**
the control of network functions of the different physical networks is undertaken by a distributed operating system (6).

6. Network architecture according to one of the preceding Claims 4 and 5,
**characterized in that**
the dynamic integration of new network elements (3, 5) is made possible by virtue of the new network element (3, 5) performing registration for a suitable different network element (3, 5) which stores this information and distributes it further to other network elements (3, 5).

7. Network architecture according to one of the preceding Claims 4 to 6,
**characterized in that**
the dynamic integration of new interfaces (1a, 1b, 4) of already existing network elements (3a, 3b, 4) is made possible by virtue of a network element (3a, 3b, 4) performing registration of the new functions for a suitable different network element which stores this information and distributes it further to further different network elements.

## Revendications

1. Procédé de mise à disposition d'un service de télécommunications à valeur ajoutée pour des utilisateurs du service par le biais d'un intégrateur de services (3, 5) composé des éléments suivantes :
- des services de base d'au moins un premier fournisseur de services (7a) d'un premier réseau physique de télécommunications et
- des services de base d'un deuxième fournisseur de services (7b) d'un deuxième réseau de télécommunications,
- l'intégrateur de services (3, 5) gérant un profil de services pour un usager et
- ce profil de services contenant un premier profil partiel pour le premier réseau physique de télécommunications et un deuxième profil partiel pour un deuxième réseau physique de télécommunications,
- l'intégrateur de services (3, 5) retransmettant les deux profils partiels aux exploitants de réseau respectifs des premier et deuxième réseaux physiques de télécommunications et
- l'intégrateur de services (3, 5) exécutant un service à valeur ajoutée demandé dès que les services de base requis pour exécuter le service à valeur ajoutée sont débloqués pour l'intégrateur de services (3, 5) par les réseaux physiques de télécommunications associés.

2. Procédé selon la revendication 1, **caractérisé en ce que** la communication entre l'intégrateur de services (3, 5) et le fournisseur de services se fait selon le principe de transaction.

3. Procédé selon l'une des revendications 1 ou 2, **caractérisé en ce que** le décompte des services utilisés avec l'usager est effectué par un centre de suivi clients (ABC) de l'intégrateur de services (3, 5).

4. Architecture de réseau pour réseaux de communication et/ou de données permettant d'exécuter le procédé selon la revendication 1, l'architecture de réseau comportant :
- deux réseaux physiques de télécommunication ;
- une architecture de réseau distribuée avec plusieurs éléments de réseau (3, 5), au moins quelques-uns des éléments de réseau (3, 5) étant prévus aux fins de la communication et de la coopération avec respectivement un réseau physique et
- au moins un fournisseur de services (8) qui est couplé à l'architecture de réseau distribuée via une interface (4) indépendante de système via une surface logique uniforme.

5. Architecture de réseau selon la revendication 4, **caractérisée en ce que** la commande de fonctions de réseau des différents réseaux physiques est prise en charge par un système d'exploitation distribué (6).

6. Architecture de réseau selon l'une des revendications précédentes 4 à 5, **caractérisée en ce que** l'intégration dynamique de nouveaux éléments de réseau (3, 5) est rendue possible par le fait que le nouvel élément de réseau (3, 5) effectue un enregistrement auprès d'un autre élément de réseau approprié (3, 5), lequel enregistre ces informations et les redistribue à d'autres éléments de réseau (3, 5).

7. Architecture de réseau selon l'une des revendications précédentes 4 à 6, **caractérisée en ce que** l'intégration dynamique de nouvelles interfaces (1a, 1b, 4) d'éléments de réseau déjà existants (3a, 3b, 4) est rendue possible par le fait qu'un élément de réseau (3a, 3b, 4) effectue un enregistrement des nouvelles fonctions auprès d'un autre élément de réseau approprié, lequel enregistre ces informations et les redistribue à d'autres éléments de réseau supplémentaires.
